# EUROPEAN PATENT SPECIFICATION

(11) **EP 4 249 280 B1**
(45) Date of publication and mention of the grant of the patent: **23.04.2025**
(21) Application number: 23189981.6
(22) Date of filing: 07.01.2020
(51) Int. Cl.: G02B 3/00, G09F 3/02, G02B 5/00, G02B 5/04, G02B 5/18, B42D 25/328

(54) **INDICATOR BODY AND LABELED PRINTED MATTER**
ANZEIGEKÖRPER UND ETIKETTIERTE DRUCKSACHE
CORPS D'INDICATEUR ET MATIÈRE IMPRIMÉE ÉTIQUETÉE

(30) Priority: 07.01.2019 JP 2019000561; 15.03.2019 JP 2019048095
(43) Date of publication of application: 27.09.2023
(62) Divisional of application: 20738217.7
(73) Proprietor: Toppan Printing Co., Ltd., Tokyo 110-0016 (JP)
(72) Inventor: UCHIDA, Satoshi, Tokyo 110-0016 (JP); YAMADA, Shizuka, Tokyo 110-0016 (JP)
(74) Representative: TBK

(56) References cited:
- DE-A1- 102011 107 154

## Description

### TECHNICAL FIELD

The present disclosure relates to a display body, a printed matter with a display body, a labelled product, and a labelled package.

### BACKGROUND ART

Labels including an anti-resistant optical structure may be attached to printed matters such as securities, cards, certification documents, and tags in order to increase difficulty in counterfeiting an object. In the present application, various forms such as a seal, a sticker, and a transfer foil are hereinafter collectively referred to as labels. Labels can be attached to a product or a package. Securities may be banknotes, gift cards, or tickets. Cards may be identification (ID) cards, credit cards, or game cards. Examples of ID cards include licenses, national ID cards, and residence cards. Examples of licenses includes driver's licenses and boat licenses.

The appearance of an optical structure is different from that of a printed matter formed by ink that contains pigment or dyestuff. Typical optical structures include an optical element such as a hologram, a diffraction grating, a multilayer interference film, and a micro-protrusion array. These optical elements include a minute uneven structure or a complicated layer structure. Therefore, analyzing and imitating these optical elements are so difficult that the optical elements are prevented from being illegally duplicated (refer to Patent Documents 1, 2).

Other types of display elements that differ from the above-described optical structure include a display element using a microlens array such as a lenticular microlens array or a microprism array (refer to Patent Documents 3, 4). This display element allows an observer to visually recognize an image display corresponding to a visual angle of the microlens array relative to the observer (i.e., corresponding to a change in the angle at which the observer observes the microlens array). The display image includes a three-dimensional or dynamic display image, a changing display image, or a display image that changes in color.

The optical structure is a display technology that mainly uses diffraction, interference, and scattering. The display element using the microlens array is a display technology that uses refraction, reflection, and dispersion. Hereinafter, the uneven structure of the optical structure is referred to as a wave optical structure and the uneven structure of the display element is referred to as a geometric optical structure. The size of each of the recesses and projections in these uneven structures is generally submicron, that is, less than 1 µm in the optical structure, and is greater than or equal to 1 µm in the display element.

The effect of counterfeit prevention is improved by further complicating the display image formed on a label and diversifying the appearance. One of the ideas for the improvement is designing a label in which the image obtained by the optical structure and the image obtained by the display element are arranged in divided regions in the same screen.

### PRIOR ART DOCUMENTS

### Patent Documents

Patent Document 1: U.S. Patent No. 5058992
Patent Document 2: Japanese Patent No. 5266770
Patent Document 3: Japanese Laid-Open Patent Publication No. 2016-114917
Patent Document 4: International Publication No. 2016/75928

EP 3 415 964 A1 discloses the preamble of claim 1.

DE 10 2011 107154 A1 discloses another display body.

### SUMMARY OF THE INVENTION

### Problems that the Invention is to Solve

If two images that are different in optical principle and size of the uneven structure are located close to each other, the reflections of the illuminating lights from these images are intertwined with each other during observation and the seen display images are mixed with each other. This may cause the images to be clearly separated from each other. As a result, the images may be unable to be recognized.

When the wave optical structure and the geometric optical structure are arranged in the divided region on the same flat surface to form the entire motif (i.e. design image), the wave optical structure and the geometric optical structure need to be formed by highly accurate positioning of molds for forming the uneven structures produced in different processes. In some arrangements where both structures are combined with each other, it may be extremely difficult to avoid deformation or fracture of the uneven structures.

The present invention provides a display body that limits, using a wave optical structure region and a geometric optical structure region arranged in the same screen, a decrease in the visibility of a design image in a display body that displays a design image and in a labelled printed matter.

### Means for Solving the Problem

A display body that solves the above-described problem includes an embossed layer. The embossed layer includes a geometric optical structure region, a wave optical structure region, and a third structure region. The third structure region is located between the geometric optical structure region and the wave optical structure region. The embossed layer includes a first uneven structure in the geometric optical structure region. The first uneven structure has a height of greater than or equal to 0.5 µm and less than 30 µm. The embossed layer includes a second uneven structure in the wave optical structure region. The second uneven structure has a height of greater than or equal to 100 nm and less than 500 nm. The embossed layer includes a third uneven structure in the third structure region. The third uneven structure has a height of greater than or equal to half a thickness of the embossed layer and less than or equal to twice the height of the first uneven structure. The height of the third uneven structure is greater than the height of the first uneven structure.

In the above-described display body, the third structure region may be in contact with the geometric optical structure region and the wave optical structure region.

In the above-described display body, the third structure region may be in contact with one of the geometric optical structure region and the wave optical structure region.

In the above-described display body, the third structure region may have a width of greater than or equal to the height of the third uneven structure and less than or equal to 500 µm, and the width of the third structure region may be a distance between edges of the third structure region in a direction in which the geometric optical structure region faces the wave optical structure region.

In the above-described display body, a portion where a top surface and a side surface that define an outer shape of the third uneven structure intersect each other in a cross-section that is orthogonal to a flat surface on which the embossed layer spreads may be a corner of the third structure, and the corner of the third uneven structure may be rounded.

The above-described display body may further include a carrier that supports the embossed layer, and the side surface of the third uneven structure may be inclined with respect to the carrier.

The above-described display body may further include a light reflection layer, and the light reflection layer may cover the geometric optical structure region, the wave optical structure region, and the third structure region.

The above-described display body may further include a light reflection layer, and the light reflection layer may cover one of the geometric optical structure region and the wave optical structure region and cover the third structure region.

The above-described display body may further include a light reflection layer, and the light reflection layer may cover the geometric optical structure region and the wave optical structure region and may not cover the third structure region.

A labelled printed matter that solves the above-described problem includes a label including the display body according to any one of claims 1 to 9 and an adhesive layer and includes a printed matter. The label is attached to the printed matter by the adhesive layer.

### Effects of the Invention

The present invention limits a decrease in the visibility of a design image.

### BRIEF DESCRIPTION OF THE DRAWINGS

Fig. 1 is a plan view showing the structure of a display body.
Fig. 2 is a cross-sectional view showing a first example of the structure of the display body.
Fig. 3A is a cross-sectional view showing a second example of the structure of the display body.
Fig. 3B is a cross-sectional view showing a third example of the structure of the display body.
Fig. 4 is a diagram schematically showing the structure of a roll-to-roll apparatus used to manufacture the display body.
Fig. 5 is a cross-sectional view showing the structure of the mold included in the plate cylinder.
Fig. 6A is a cross-sectional view showing a fourth example of the structure of the display body.
Fig. 6B is a cross-sectional view showing a fifth example of the structure of the display body.
Fig. 7A is a plan view showing a first arrangement example of the geometric optical structure, the wave optical structure, and the third structure in the display body.
Fig. 7B is a plan view showing a second arrangement example of the geometric optical structure, the wave optical structure, and the third structure in the display body.
Fig. 7C is a plan view showing a third arrangement example of the geometric optical structure, the wave optical structure, and the third structure in the display body.
Fig. 8 is a plan view showing a fourth arrangement example of the geometric optical structure, the wave optical structure, and the third structure in the display body.
Fig. 9 is a plan view showing a fifth arrangement example of the geometric optical structure, the wave optical structure, and the third structure in the display body.
Fig. 10A is a plan view showing a sixth arrangement example of the geometric optical structure, the wave optical structure, and the third structure in the display body.
Fig. 10B is a plan view showing a seventh arrangement example of the geometric optical structure, the wave optical structure, and the third structure in the display body.
Fig. 11A is a cross-sectional view showing the structure of an example of the display body.
Fig. 11B is a cross-sectional view showing the structure of a mold used to form the display body shown in Fig. 11A.
Fig. 12A is a cross-sectional view showing a sixth example of the structure of the display body.
Fig. 12B is a cross-sectional view showing a seventh example of the structure of the display body.
Fig. 12C is a cross-sectional view showing an eighth example of the structure of the display body.
Fig. 13 is a plan view showing the structure of a labelled security serving as a labelled article with a display body.

### MODES FOR CARRYING OUT THE INVENTION

A display body according to an embodiment will now be described with reference to the drawings. Throughout all of the drawings, elements that perform the same or similar functions are designated by the same reference numerals unless there is a reason for convenience. The duplicate description will be omitted.

In addition, the drawings are descriptive. The dimensions shown in the drawings may differ from the actual ones (for example, the thickness of each layer and its ratio). The dimensional ratios in the drawings should not be construed as being limited thereto.

The display body according to the embodiment is a group of embodiments based on a unique single invention from the same technical background. Each aspect of the present disclosure is an aspect of the group of embodiments based on the single invention. The described components may include each aspect of the present disclosure. The features of the present disclosure can be combined with each other. Therefore, the described features, configurations, aspects, and embodiments can be combined with each other. The combination can produce synergistic functions and synergistic effects.

### Summary of Display Body

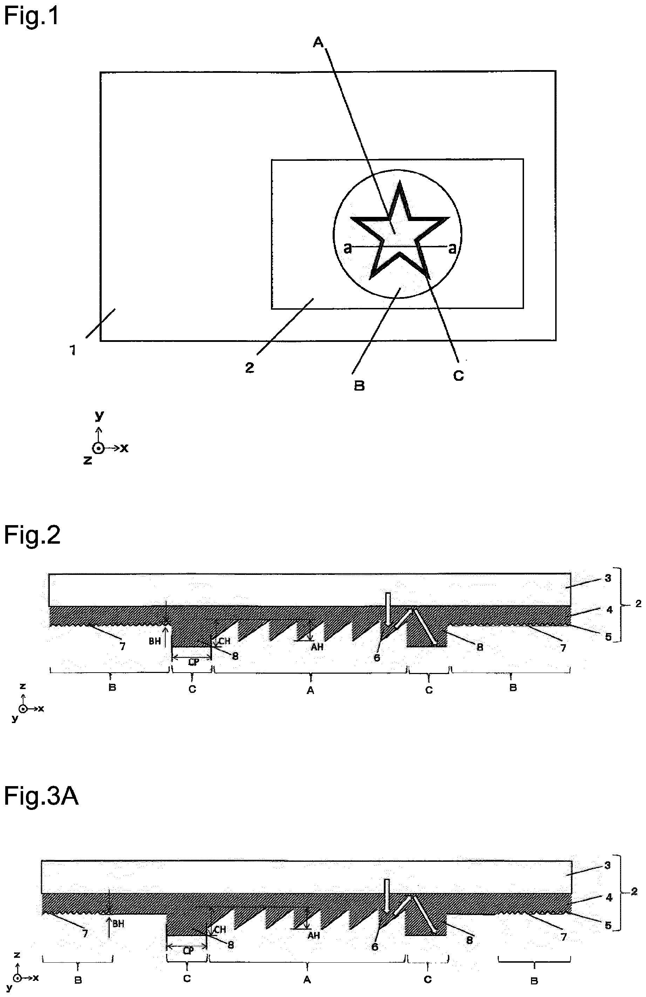

Fig. 1 is a plan view showing the structure of the display body according to the embodiment.

As shown in Fig. 1, a display body 2 attached to a card 1 includes a geometric optical structure region A with a geometric optical structure, a wave optical structure region B with a wave optical structure, and a third structure region C that is located between region A and region B and has a third structure. Any motif (illustration) may be used for an image displayed by combining the three regions of the display body 2 with each other. The motif is not limited to an emblem of the circle surrounding a five-pointed star illustrated in Fig. 1. Instead, the motif may be, for example, a portrait, a landmark, a text, a mark, a symbol, a signal, a geometric pattern, or a decorative pattern.

Fig. 2 is a cross-sectional view of the display body 2 taken along line a-a in Fig. 1. The display body 2 includes a carrier 3, an embossed layer 4, and a light reflection layer 5. The display body 2 further includes various functional layers, such as an adhesive layer used to attach the display body 2 to an article and a protective layer that used to protect the surface of the display body 2.

The carrier 3 supports the embossed layer 4. The carrier 3 may be omitted as long as the embossed layer 4 is so rigid that the embossed layer 4 can be handled as a film or a sheet without any problems. The carrier 3 may also serve as the embossed layer 4 as long as the uneven structures of the geometric optical structure region A, the wave optical structure region B, and the third structure region C can be formed on the surface of the carrier 3. The carrier 3 may be a plastic film. The base material of the plastic film is preferably a thermoplastic polymer. Examples of the plastic film includes a polyethylene terephthalate (PET) film, a polyethylene (PE) film, a polypropylene (PP) film, and a polycarbonate (PC) film.

The thickness of the carrier 3 may be greater than or equal to 30 µm and less than 300 µm. Also, the thickness of the carrier 3 may be greater than or equal to 70 µm and less than 200 µm. The carrier 3 may be transmissive to ultraviolet light, visible light, or both ultraviolet light and visible light. In particular, the carrier 3 may be transmissive to ultraviolet light having a wavelength of UV-A (400 nm to 315 nm).

The base material of the embossed layer 4 may be a translucent polymer. The base material of the embossed layer 4 may also be a thermosetting polymer, a thermoplastic polymer, or a light-cured polymer. One of these base materials is used to transfer the uneven structures of a geometric optical structure 6, a wave optical structure 7, and a third structure 8 to the base material from the molds including the uneven structures of the geometric optical structure 6, the wave optical structure 7, and the third structure 8. The embossed layer 4 is formed by applying a precursor onto the carrier 3.

The precursor may be, a thermosetting precursor, a light-cured precursor, or a mixture thereof. The precursor may also be a composition of a monomer, an oligomer, and a polymer. The thermosetting precursor may be a thermosetting polymer or a thermosetting composition. The light-cured precursor may be a light-cured polymer or a light-cured composition. The light-cured precursor may be an ultraviolet-cured polymer that is cured by ultraviolet light. The ultraviolet thermosetting precursor may be an ultraviolet-cured polymer or an ultraviolet-cured composition. In such compositions, the hardness and curing shrinkage of the compositions are easily adjusted. Also, the precursor may be an electron beam-cured polymer or an electron beam-cured composition.

To apply the precursor, a volatile solvent can be used. The volatile solvent may be a ketone, an acetic ester, an alcohol, a toluene, or a mixture of the same type or different types of these solvents. Examples of the ketone include a methyl ethyl ketone and a methyl isobutyl ketone. Examples of the acetic ester include an ethyl acetate and a butyl acetate. Examples of the alcohol include an isopropyl alcohol.

The original plate including a minute structure is pressed against the applied layer and then the precursor is hardened, so that various uneven structures are formed on the surface of the applied layer. The original plate including a minute structure is pressed against the layer of the thermoplastic polymer and then the layer of the thermoplastic polymer is softened, so that various uneven structures are formed on the surface of the layer of the thermoplastic polymer. The thickness of the embossed layer 4 is set in correspondence with the height of the geometric optical structure 6 and the height of the third structure 8. This allows various uneven structures to be molded at a processing speed that is favorable in productivity and ensures the moldability of the uneven structures.

The embossed layer 4 may include a fluorophore or an initiator. Alternatively, the base material used to form the embossed layer 4 may be fluorescent. The base material is fluorescent when provided with a fluorescent molecular structure. In this manner, the embossed layer 4 is fluorescent. The initiator may be a photopolymerization initiator. Further, the embossed layer 4 may contain a surface modifier. The surface modifier may be reactive or non-reactive. The surface modifier may be unevenly distributed in the vicinity of the surface of the applied layer when a volatile solvent is volatilized during the application of the surface modifier. The surface modifier may have properties of lowering the surface tension or may have properties of improving the adherence to the reflective layer.

The average thickness of the embossed layer 4 may be greater than or equal to 0.5 µm and less than 25 µm. This average thickness may be the thickness of the embossed layer 4. When the display body 2 includes a region that is in contact with the wave optical structure region B including the wave optical structure 7, does not belong to the three regions A, B, C, and does not include the uneven structure (in other words, when the display body 2 includes a flat region having a flat surface) as shown in Fig. 3A (described later), the distance between the interface between the embossed layer 4 and the carrier 3 in the flat region and the surface of the embossed layer 4 opposite to that interface is the thickness of the embossed layer 4. In Fig. 3A, the region between the wave optical structure region B and the third structure region C is the flat region.

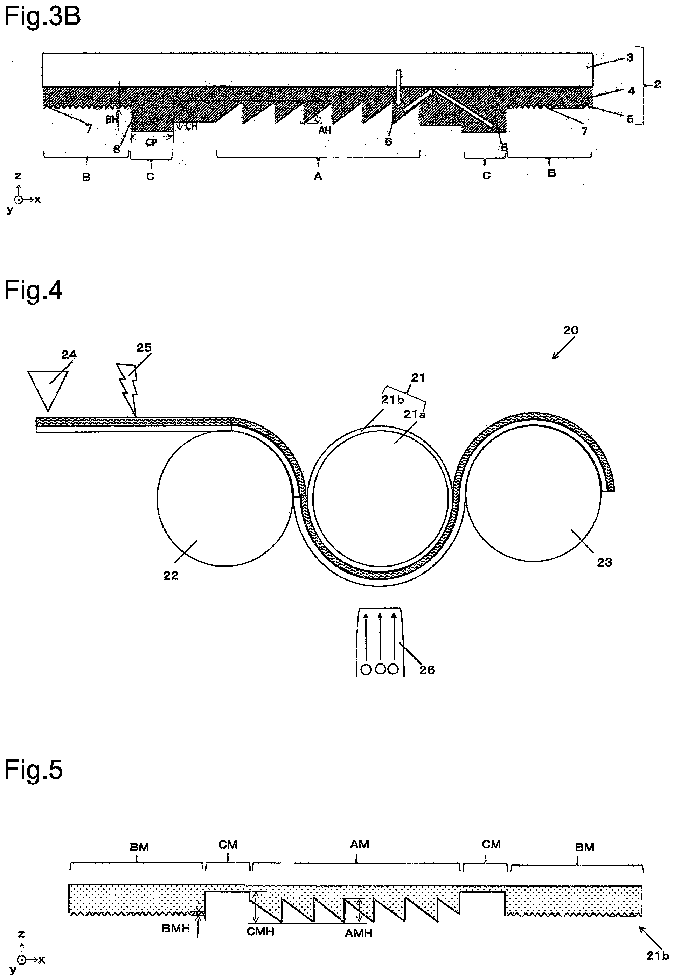

When the display body 2 does not include the flat region as shown in Fig. 2 and Fig. 3B (described later), the distance between the interface between the embossed layer 4 and the carrier 3 and an approximation surface obtained by approximating, with a flat surface, the uneven surface of the wave optical structure 7 in the wave optical structure region B is the thickness of the embossed layer 4.

### Geometric Optical Structure

The structure employed as the geometric optical structure 6 will now be described. The geometric optical structure 6 is an example of a first uneven structure. The embossed layer 4 includes the geometric optical structure 6 in the geometric optical structure region A. The geometric optical structure 6 includes height AH needed to achieve the visual effect of the geometric optical structure 6. Height AH is, for example, greater than or equal to 0.5 µm and less than 30 µm. The cycle of the geometric optical structure 6 is, for example, greater than or equal to 0.5 µm and less than 100 µm. Height AH of the geometric optical structure 6 may be the distance from the top of the geometric optical structure 6 to the bottom of the geometric optical structure 6. When height AH of the geometric optical structure 6 is not fixed, the average height of the geometric optical structure 6 in the geometric optical structure region A may be height AH of the geometric optical structure 6. The cycle of the geometric optical structure 6 is the distance between one of the tops of the geometric optical structure 6 and its adjacent top.

To limit a decrease in moldability of the embossed layer 4 due to an increase in the molding speed of the embossed layer 4, it is advantageous that the embossed layer 4 is thick. The thickness of the embossed layer 4 is greater than or equal to one times or more height AH of the geometric optical structure 6 and may be approximately twice height AH. However, in order to reduce the costs of the display body by decreasing the amount of materials for molding the embossed layer 4, it is desired that the embossed layer 4 be thin and the processing speed of the embossed layer 4 be high. A smaller cycle of the geometric optical structure 6 tends to be more advantageous for molding. A larger cycle of the geometric optical structure 6 tends to be less advantageous. That is, the moldability of the geometric optical structure 6 is ensured more easily when the cycle of the geometric optical structure 6 is smaller, and the moldability of the geometric optical structure 6 is ensured less easily when the cycle of the geometric optical structure 6 is larger.

The visual effect of the geometric optical structure region A including the geometric optical structure 6 is achieved by the refraction and reflection of light in the geometric optical structure 6. Examples of the geometric optical structure 6 that provides the visual effect using light refraction include a lens and a prism.

The light refraction structure that can be employed as the geometric optical structure 6 of the display body will now be described. The light refraction structure is, for example, a microlens array. By overlapping the microlens array with a microprint and focusing the microlens on the microprint, a dynamic visual effect is achieved. Examples of the microprint may include a character, a text, a mark, a logo, and an illustration.

The surface of the geometric optical structure 6 may also include a light reflection structure. In Fig. 2, the surface of the geometric optical structure 6 does not include the light reflection structure. The light reflection structure may be a reflective metal thin film. Forming the reflective metal thin film on the surface of the uneven structure allows an observer to visually recognize a highly bright reflected light as a display light used to display an image. Alternatively, the light reflection structure may be a semi-transmissive thin film. In this case, a material needs to be used considering of the difference between the refractive index of the semi-transmissive thin film and the refractive index of the embossed layer 4. The use of such a material allows the display body 2 to have the visual effect including at least one of transmission, semi-transmission, and total reflection depending on the angle formed by the angle of an illuminating light and the surface of the uneven structure.

The use of the geometric optical structure 6 including the above-described optical effect allows the display body 2 to be formed such that the display body 2 is capable of displaying any illustration. The geometric optical structure 6 is a part of the display body 2.

### Wave Optical Structure

The structure employed as the wave optical structure 7 will now be described. The wave optical structure 7 is an example of a second uneven structure. The embossed layer 4 includes the wave optical structure 7 in the wave optical structure region B. Examples of the wave optical structure 7 may include a hologram, a diffraction grating, a multilayer interference film, or a micro-protrusion array. To achieve the visual effect of the wave optical structure 7, height BH of the wave optical structure 7 is greater than or equal to 100 nm and less than 500 nm. The wave optical structure region B produces at least one of optical interactions including diffraction, interference, dispersion, absorption, and resonance with the light emitted to the wave optical structure region B.

The embossed layer 4 may be made of a translucent polymer. When the wave optical structure 7 formed on the surface of the embossed layer 4 is a relief hologram or a diffraction grating, the light reflection layer 5 (such as a reflective metal thin film or a semi-transmissive thin film) is versatilely formed on the surface of the wave optical structure 7. This increases the difference in refractive index between the surface of the wave optical structure 7 and the interface of the thin film and thus provides a sufficient hologram effect (i.e., a high intensity of diffracted light). The light reflection layer 5 may be a metal layer or an oxide film. The metal layer is made of metal such as aluminum, silver, gold, or an alloy thereof. The oxide film includes a transparent material, such as silica and alumina. The light reflection layer 5 is formed through vapor-phase deposition such as vacuum evaporation or sputtering. The thickness of the light reflection layer 5 is typically between 10 nm and 200 nm inclusive. The light reflection layer 5 may have a uniform thickness. Alternatively, the light reflection layer 5 may include regions that differ in thickness. For example, in the light reflection layer 5, the portions located in the third structure region C may be thinner than the portions located in the wave optical structure region B and the geometric optical structure region A. Such a structure allows the third structure 8 to absorb light easily and thus reduces light noise easily. Thinning the light reflection layer 5 allows the light reflection layer 5 to have light reflectivity and be light transmissive such that some of the light is transmitted through the light reflection layer 5.

### Third Structure

The structure employed as the third structure 8 will now be described. The third structure 8 is an example of a third uneven structure. The embossed layer 4 includes the third structure 8 in the third structure region C. Height CH of the third structure 8 is preferably greater than or equal to half the thickness of the embossed layer 4 and less than or equal to twice height AH of the geometric optical structure 6. This is advantageous for molding the third structure 8 and obtaining the effect of the third structure 8. Height CH of the third structure 8 may be the distance from the bottom of the geometric optical structure 6 to the upper part of the third structure.

The third structure 8 may have the shape of a rib extending in one direction. The cross-section of the rib shape may be a trapezoid. Such a shape is excellent in moldability. The top of the third structure 8 may have a mat structure. Such a structure easily disperses light and reduces noise. The mat structure is formed by transferring the shape of a matte-finish mold. The matte-finish may be sandblasting finish, etching finish, or hairline finish. Further, the third structure 8 may be a one-dimensional or two-dimensional grid having a width of less than or equal to 500 nm. Such a grid absorbs light easily and thus reduces noise easily.

In addition, height CH of the third structure 8 may be greater than height AH of the geometric optical structure 6. For example, when height AH of the geometric optical structure 6 is 10 µm, the thickness of the embossed layer 4 is preferably in the range from 10 µm, which is equal to height AH of the geometric optical structure 6, to 20 µm, which is twice height AH. This allows for processing at a processing speed indicating favorable productivity and ensures the moldability of the third structure 8. The lower limit value of height CH of the third structure 8 is half the thickness of the embossed layer 4. Thus, when the thickness of the embossed layer 4 is 10 µm, height AH of the third structure 8 is greater than or equal to 5 µm. When the thickness of the embossed layer 4 of 20 µm, height CH of the third structure 8 is greater than or equal to 10 µm.

The upper limit value of height CH of the third structure 8 is twice height AH of the geometric optical structure. Thus, when height AH of the geometric optical structure 6 is 10 µm, height CH of the third structure 8 is less than or equal to 20 µm.

Accordingly, when height AH of the geometric optical structure 6 is 10 µm, height CH of the third structure 8 may have a lower limit value of 5 µm and an upper limit value of 20 µm.

When the embossed layer 4 is made of cured resin, the third structure 8 may differ from the other structures in hardness. In particular, the third structure 8 may be lower than the other structures in hardness. Additionally, in the third structure 8, the hardness of the third structure 8 may decrease in a direction from the carrier 3 toward the light reflection layer 5. Such a structure increases the elasticity of the third structure 8 and is thus likely to prevent the third structure 8 from being destroyed by external force.

Further, the difference in hardness between the third structure 8 and the other structures lowers the adherence between the third structure 8 and the light reflection layer 5 as compared to the adherence between the geometric optical structure 6 and the light reflection layer 5 and the adherence between the wave optical structure 7 and the light reflection layer 5. Furthermore, the adherence between the third structure 8 and the embossed layer 4 becomes lower than the adherence between the geometric optical structure 6 and the embossed layer 4 and the adherence between the wave optical structure 7 and the embossed layer 4. Thus, only the portions of the light reflection layer 5 that are on the third structure 8 can be entirely or partially eliminated through lift-off, etching, or sandblasting.

Consequently, the portions of the light reflection layer 5 on the third structure 8 are smaller than the portions of the light reflection layer 5 on the other structures in thickness, coverage area ratio, or both thickness and coverage area ratio. The light reflection layer 5 does not have to be located on the third structure 8. This lowers the reflection rate of the third structure 8 as compared to the other structures and thus easily reduces light noise. In particular, the portions of the light reflection layer 5 on the top surface of the third structure 8 are smaller than the portions of the light reflection layer 5 on the other structures in thickness, coverage area ratio, or both thickness and coverage area ratio. The light reflection layer 5 does not have to be located on the top surface of the third structure 8. Likewise, the portions of the light reflection layer 5 on the side surface of the third structure 8 are smaller than the portions of the light reflection layer 5 on the other structures in thickness, coverage area ratio, or both thickness and coverage area ratio. The light reflection layer 5 does not have to be located on the side surface of the third structure 8.

When the embossed layer 4 is fluorescent, the third structure 8 may be more fluorescent than the geometric optical structure 6 and the wave optical structure 7. Thus, irradiating the embossed layer 4 with excitation lights allows the light emission of the third structure 8 to become more intense than that of the geometric optical structure 6 and the wave optical structure 7. This allows the third structure 8 to produce a latent image. In the third structure 8, the boundary between the geometric optical structure 6 and the third structure 8 and/or the boundary between the wave optical structure 7 and the third structure 8 can be edged. This allows for edging using a boundary where light is emitted by excitation lights. Further, in the third structure 8, the light emitted in the geometric optical structure 6 and the wave optical structure 7 disperses and removes out the light guided to the third structure 8. Thus, the third structure 8 has a higher fluorescence intensity than the geometric optical structure 6 and the wave optical structure 7.

Such edging with the third structure 8 is easily visible and facilitates visual verification of whether the display body 2 is genuine. Further, the embossed layer 4 may be fluorescent, and width CP of the third structure region C may include multiple values. Furthermore, width CP of the third structure region C may vary continuously in the extending direction of the third structure region C. Such edging through the light emission of the third structure 8 has a dynamic appearance.

When the geometric optical structure 6 is embossed on the applied layer, air biting failure and insufficient filling tend to occur due to a sudden structural change in the surroundings of an illustration formed by the geometric optical structure 6, that is, a sudden structural change at the edge of the geometric optical structure 6 and at the boundary between the geometric optical structure 6 and the outside of the geometric optical structure 6 (i.e., at a portion outside of the geometric optical structure 6 that is in contact with the geometric optical structure 6). Air biting failure refers to the generation of bubbles between the applied layer and the original plate. Insufficient filling means that the uneven structure of the original plate is not sufficiently filled with part of the applied layer. Thus, stable molding is difficult at the edge of the geometric optical structure 6. In this case, the moldability decreases at the boundary between the illustration formed by the geometric optical structure 6 and the outside of the illustration. This lowers the visibility of the illustration formed by the geometric optical structure 6. Further, the illustration formed by the geometric optical structure 6 tends to be obscured.

In addition, when the geometric optical structure region A is in contact with, for example, the wave optical structure region B, a decrease in moldability decrease and molding defects may occur in the wave optical structure 7 at the portion where the geometric optical structure region A is in contact with the wave optical structure region B. To solve this problem, the geometric optical structure region A is located adjacent to the third structure region C. This limits a decrease in the visibility of the illustration formed by the geometric optical structure 6 and allows the geometric optical structure region A to produce an ideal visual effect. That is, the geometric optical structure 6 provides the visual effect that is required for the geometric optical structure 6. The third structure region C including the third structure 8 is generally flat. The third structure region C is flatter than the geometric optical structure region A and the wave optical structure region B. Thus, because of the shape of the third structure region C, a single third structure region C does not express a special illustration. Even if the moldability of the third structure 8 decreases, the visual effect does not decrease sharply due to the decrease in the moldability.

As shown by the blank arrows in Fig. 2, the light guided from the geometric optical structure region A to the wave optical structure region B is interrupted. The interruption by the third structure 8 hinders the light from propagating from the geometric optical structure region A to the wave optical structure region B in addition to the light that has entered the wave optical structure region B. This prevents the occurrence of noise caused by the light in the wave optical structure region B. As a result, a decrease is limited in the visibility of the illustration formed by the wave optical structure region B. The third structure 8 also interrupts the light guided from the wave optical structure region B to the geometric optical structure region A. Thus, in the geometric optical structure region A, the noise resulting from the light that propagates from the wave optical structure region B is prevented.

In the third structure 8, the surroundings of the illustration formed by the geometric optical structure 6 are edged. Thus, when the observer observes the display body 2, the observer easily detects the edges of the illustration formed by the geometric optical structure 6. As a result, the visibility of the illustration formed by the geometric optical structure region A increases.

Additionally, the third structure region C including the third structure 8 is generally flat. Thus, the behavior of the third structure 8 for incident light differs from the behavior of the geometric optical structure 6 for incident light. In other words, the light incident on the third structure 8 and the light incident on the geometric optical structure 6 are respectively emitted from the structures in different states. For example, when the geometric optical structure 6 has a reflection structure and includes, as a reflection surface, an inclined surface at an angle of 45 degrees relative to the flat surface of the carrier 3, the angle formed by the reflected light of the geometric optical structure region A and the flat surface of the carrier 3 differs from the angle formed by the reflected light of the third structure region C and the flat surface of the carrier 3 even if light enters the geometric optical structure region A and the third structure region C at the same angle. Thus, in a case where the display body 2 is observed in an inclined manner, a change in the appearance of the third structure region C for the observer is different from a change in the appearance of the geometric optical structure region A for the observer.

Even in the display body 2 having the cross-sectional shape as shown in Figs. 3A and 3B, the effect of limiting a decrease in the visibility of the illustration formed by the geometric optical structure 6 is expected. Fig. 3A shows that the geometric optical structure region A is in contact with the third structure region C and the wave optical structure region B is not in contact with the third structure region C. Fig. 3B shows that the geometric optical structure region A is not in contact with the third structure region C and the wave optical structure region B is in contact with the third structure region C.

Even in these cases, the light guided from the geometric optical structure region A to the wave optical structure region B hinders the light from propagating from the geometric optical structure region A to the wave optical structure region B in addition to the light that has entered the wave optical structure region B. Thus, the third structure 8 prevents the occurrence of noise caused by the light in the wave optical structure region B. As a result, a decrease is limited in the visibility of the illustration formed by the wave optical structure region B. Further, the third structure 8, which is the boundary between the geometric optical structure region A and the wave optical structure region B, prevents the noise that is generated in the geometric optical structure region A by the light propagating from the wave optical structure region B. As a result, a decrease is limited in the visibility of the illustration formed by the geometric optical structure region A.

Accordingly, the display body 2 includes the third structure region C as the boundary between the geometric optical structure region A and the wave optical structure region B so as to increase the visibility of the illustrations formed by the optical structure regions A, B. This allows the display body 2 to form sophisticated illustrations. Further, the display body 2 includes a pair of the wave optical structure region B and the geometric optical structure region A so as to form illustrations having delicate colors like silk.

Width CP of the third structure region C may be, for example, greater than or equal to height CH of the third structure 8 and less than 500 µm. Width CP of the third structure region C being greater than or equal to the height of the third structure 8 ensures the moldability of the third structure 8. Further, width CP of the third structure region C being less than 500 µm provides the visual effect of the third structure 8. For instance, like in the above-described example, when height CH of the third structure region C is greater than or equal to 5 µm and less than or equal to 20 µm, width CP of the third structure region C can have a lower limit value that is in the range between 5 µm and 20 µm inclusive and has an upper limit value of 500 µm in correspondence with height CH of the third structure 8.

Width CP of the third structure region C refers to the distance between the edges of the third structure region C in a direction in which the geometric optical structure region A and the wave optical structure region B face each other in a plan view of the flat surface on which the embossed layer 4 spreads. When the distance between the edges includes multiple values, width CP of the third structure region C is a lower limit value of the distance between the edges.

### Manufacturing Method

The geometric optical structure 6, the wave optical structure 7, and the third structure 8 are formed by embossing (i.e., press-molding), on the surface of the applied layer for forming the embossed layer 4, molds for forming the uneven structures of the geometric optical structure 6, the wave optical structure 7, and the third structure 8. The mold for forming an uneven structure is a stamper or a mold. For example, flat-pressing using a flat stamper or roll-pressing using a roll stamper can be selected for press-molding. To mass-produce the display body 2, it is efficient to use a roll-to-roll method. The roll-to-roll method continuously supplies a laminate sheet (a web) including the embossed layer 4 prior to being molded and then winding the web subsequent to the molding of the embossed layer 4.

An example of a method for forming the geometric optical structure 6 of the display body 2 will now be described with reference to Fig. 4. Fig. 4 schematically shows a part of the structure of a roll-to-roll apparatus 20. The roll-to-roll apparatus 20 (described below) is an example of a manufacturing apparatus for manufacturing the geometric optical structure 6. The following description focuses on the structure of the roll-to-roll apparatus 20, that is, a structure in which the embossed layer 4 of the geometric optical structure 6 is formed from a precursor.

As shown in Fig. 4, the roll-to-roll apparatus 20 includes a plate cylinder 21, a pressing roll 22, a conveying roll 23, a supplier 24, a heater 25, and an irradiator 26. The supplier 24, the heater 25, and the irradiator 26 are arranged in this order from the upstream side toward the downstream side in a direction in which a web is conveyed.

The supplier 24 supplies an uncured precursor that is used to form the embossed layer 4 on the carrier 3. The supplier 24 may be a dispenser or a die. Thus, a precursor layer of the embossed layer 4 is formed on the carrier 3. The precursor supplied by the supplier 24 is an ultraviolet-cured composition or an ultraviolet-cured polymer, which have been described above. Alternatively. the precursor may be a light-cured composition or a light-cured polymer that is cured by light other than ultraviolet light. The heater 25 softens the precursor by heating the precursor that has been supplied by the supplier 24 to the carrier 3. This improves the moldability of the precursor and increases the reactivity of the precursor.

The plate cylinder 21 and the pressing roll 22 have a columnar shape extending in an extension direction. The plate cylinder 21 and the pressing roll 22 convey the carrier 3 in the gap between the plate cylinder 21 and the pressing roll 22. When conveying the carrier 3 in the gap between the plate cylinder 21 and the pressing roll 22, the pressing roll 22 contacts the carrier 3 and presses, against the outer surface of the plate cylinder 21, the precursor layer on the carrier 3.

The plate cylinder 21 includes a body 21a and a mold 21b. The body 21a has a columnar shape extending in the extension direction. The body 21a may be a roll core. The body 21a may include a temperature controller. The temperature controller may be a cooler or a heater. The mold 21b includes a tubular shape covering the outer circumferential surface of the body 21a. The surface of the mold 21b has an uneven shape used to form the geometric optical structure 6 that is transferred to the precursor layer. The uneven shape of the mold 21b is transferred to the precursor layer by the pressing roll 22 pressing the precursor layer against the mold 21b.

The roll-to-roll apparatus 20 may include a back-up roll instead of the plate cylinder 21. In this case, the mold 21b may be formed using a polymer film. The polymer film may have a single-layer structure or a multi-layer structure. The thickness of the polymer film may be greater than or equal to 50 µm and less than or equal to 300 µm. The thickness of the polymer film may be a value measured using a micrometer. The head of the micrometer may have a flat tip. The diameter of the head of the micrometer may be greater than or equal to 2 mm and less than or equal to 10 mm.

When the polymer film has a multi-layer structure, the polymer film may include a carrier and a mold layer. Examples of the material of the polymer film may include acrylic, silicone, and fluorine resin. Examples of the material of the carrier may include polyethylene terephthalate, polypropylene, and polyethylene. The material of the mold layer may be acrylic, silicone, or elastomer.

The thickness of the carrier may be greater than or equal to 50 µm and less than or equal to 300 µm. The average thickness of the mold layer may be greater than or equal to 1 µm and less than 50 µm. For the average thickness of the mold layer, the same definition as the embossed layer 4 may be used. In general, the polymer film easily peels off from the embossed layer 4. Thus, even if the embossed layer 4 is molded from a highly-adhesive precursor, molding defects are less likely to occur in the polymer film. In addition, the polymer film is highly flexible. This limits chipping of the uneven structure of the polymer film. The polymer film mold allows the geometric optical structure 6, the wave optical structure 7, and the third structure 8 to be formed with high quality.

The irradiator 26 is capable of irradiating the precursor layer with ultraviolet light. The irradiator 26 may be a curing lamp. As another option, the irradiator 26 may irradiate the precursor layer with visible light. This hardens the precursor layer and forms the embossed layer 4. Examples of the irradiator 26 may include a mercury lamp and a discharge lamp such as a metal halide lamp. As an alternative, the irradiator 26 may be a light emitting diode (LED) lamp that emits light contained in an ultraviolet region. The productivity of the display body 2 improves when the irradiator 26 is a lamp corresponding to the curing characteristic of an ultraviolet-cured polymer supplied by the supplier 24.

The conveying roll 23 has a columnar shape extending in the extension direction in the same manner as the plate cylinder 21 and the pressing roll 22. The plate cylinder 21 and the conveying roll 23 convey the carrier 3 in the gap between the plate cylinder 21 and the conveying roll 23. The conveying roll 23 conveys the carrier 3 subsequent to being irradiated with ultraviolet light. Thus, the carrier 3 in contact with the conveying roll 23 includes the embossed layer 4. The conveying roll 23 contacts the carrier 3 and conveys the carrier 3 in the gap between the plate cylinder 21 and the conveying roll 23, so that the embossed layer 4 on the carrier 3 peels off from the plate cylinder 21.

Thus, the formation of the embossed layer 4 including the geometric optical structure 6 allows the display body 2 to record part of a display image that can be formed by the display body 2.

When the precursor layer for forming the embossed layer 4 is made of an electron beam-cured polymer or an electron beam-cured composition, the roll-to-roll apparatus 20 may include an irradiator 26 that emits electron beams instead of the irradiator 26 that emits ultraviolet light. When the precursor layer for forming the embossed layer 4 is made of polymer that is cured by light other than ultraviolet light, the roll-to-roll apparatus 20 may include an irradiator 26 that emits light used to cure the embossed layer 4 instead of the above-described irradiator 26.

When the precursor layer for forming the embossed layer 4 is made of a thermosetting precursor polymer, the heater 25 and the irradiator 26 of the roll-to-roll apparatus 20 may be replaced with a heater that heats a precursor layer in contact with the mold 21b or a precursor layer subsequent to contacting the mold. When the precursor layer for forming the embossed layer 4 is made of a thermoplastic polymer, the irradiator 26 simply needs to be omitted from the roll-to-roll apparatus 20 and the heater simply needs to heat the precursor layer to such a degree that the shape of the mold is transferrable on the precursor layer.

With reference to Fig. 5, the structure of the mold 21b of the plate cylinder 21 will now be described in more detail.

Fig. 5 shows the cross-section of the mold 21b prior to being wound onto the body 21a (in other words, the mold 21b having a flat shape).

As shown in Fig. 5, the mold 21b includes a surface. The surface of the mold 21b is in contact with a precursor layer during manufacturing of the geometric optical structure 6. The uneven structure of the surface is transferred to the precursor layer. The surface includes a flat surface and an uneven surface. The uneven surface includes projected surfaces, each of which protrudes from the flat surface.

The surface of the mold 21b is an uneven surface. The uneven surface includes a geometric optical structure region AM, a wave optical structure region BM, and a third structure region CM. The geometric optical structure region AM of the uneven surface is used to form the geometric optical structure 6 of the embossed layer 4. The wave optical structure region BM of the uneven surface is used to form the wave optical structure 7 of the embossed layer 4. The third structure region CM of the uneven surface is used to form the third structure 8 of the embossed layer 4. Thus, each of the regions of the uneven surfaces has a shape corresponding to the region of the embossed layer 4 formed by the regions.

The heights of the projected surfaces in the regions are set with reference to the flat surfaces including the bottoms of the geometric optical structure 6, the wave optical structure 7, and the third structure 8. In other words, the distance between the flat surface and the top of the projected surface is the height of the projected surface. In the uneven surface, height AMH of the projected surface in the geometric optical structure region AM is greater than height BMH of the projected surface in the wave optical structure region BM. Height CMH of the projected surface in the third structure region CM is greater than height AMH of the projected surface in the geometric optical structure region AM and height BMH of the projected surface in the wave optical structure region BM.

As described above, at least one of air biting failure and insufficient filling occurs when the processing speed for forming the embossed layer 4 is increased at the edge of the geometric optical structure 6. Thus, it is difficult to stably mold the edge of the geometric optical structure 6. To solve this problem, the display body 2 includes the third structure 8 as described above. This allows the display body to stably display an illustration and improve the visual effect.

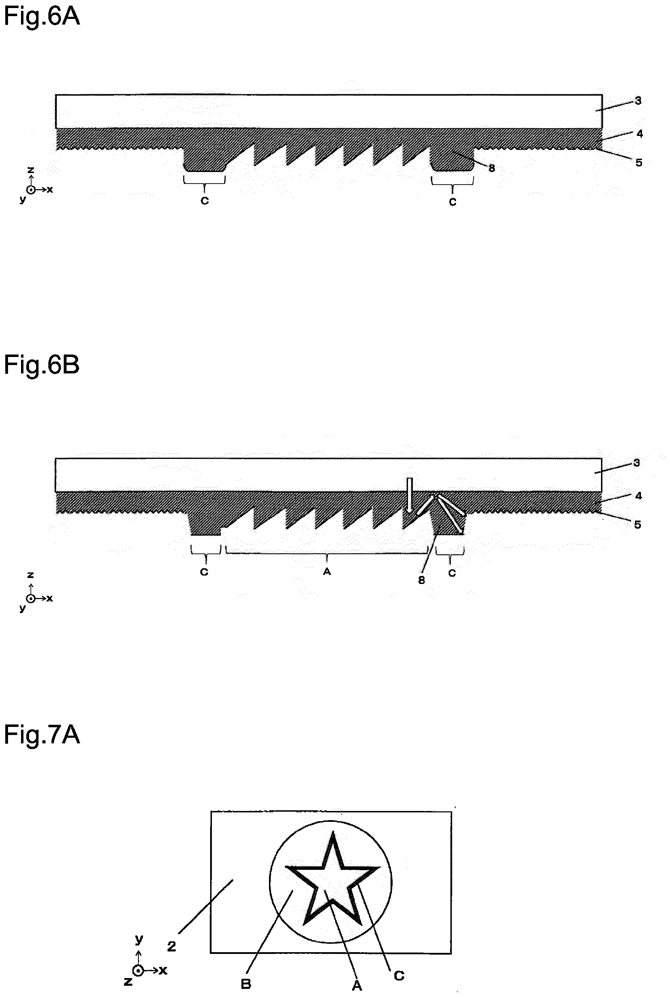

As shown in Fig. 6A, in order to ensure the moldability of the third structure region C, the rectangular corner of the third structure 8 may be rounded in the cross-section that is orthogonal to the flat surface on which the embossed layer 4 spreads. The round may have a radius greater than or equal to 10.5 µm and less than or equal to 5 µm. The corner of the third structure 8 refers to a portion where the side surface and the top surface of the third structure 8 that define the outer shape of the third structure 8 intersect each other in the cross-section that is orthogonal to the flat surface on which the embossed layer 4 spreads. The rounded corner of the third structure 8 allows the original plate to be easily filled with the material of which the embossed layer 4 is made.

As shown in Fig. 6B, the side surface of the third structure 8 may be inclined with respect to the carrier 3 in the cross-section that is orthogonal to the flat surface on which the embossed layer 4 spreads. That is, in the third structure 8, the cross-section that is orthogonal to the flat surface on which the embossed layer 4 spreads may have a trapezoid shape. When the cross-section has a trapezoid shape, the inclination angle may be between 1° and 10° inclusive with respect to the direction perpendicular to the flat surface on which the embossed layer 4 spreads. That is, the angle formed by the side surface of the third structure 8 and the flat surface on which the embossed layer 4 spreads may be between 80° and 89° inclusive. This structure, in which the side surface of the third structure 8 is inclined, also allows the original plate to be easily filled with the material of which the embossed layer 4 is made. This ensures the moldability of the third structure 8 and hinders insufficient curing that would result from the oxygen that exists between the original plate and the material of which forming the embossed layer 4 is made. Thus, insufficient peeling of the embossed layer 4 is prevented. Consequently, a fault resulting from insufficient curing in part of the display body 2 is less likely to occur in the display body 2.

In the structure in which the side surface of the third structure 8 is inclined, the side surface may be only partially inclined or may be entirely inclined. The inclination of the side surface of the third structure 8 increases the effective area of the third structure 8 that functions to hinder the propagation of light from the geometric optical structure region A to the wave optical structure region B. Thus, the noise resulting from the propagated light is likely to be prevented.

The mold 21b may be made of metal, polymer, or glass. Examples of the metal include iron, chrome, nickel, copper, aluminum, or an alloy thereof. The mold 21b may include a base and a plating layer that covers the surface of the base. In this case, the plating layer may have a thickness of greater than or equal to 1 µm and less than or equal to 300 µm.

The mold 21b can be formed through electroforming. That is, the mold 21b may be an electroformed mold. The electroformed mold can be manufactured by duplicating a master through electroforming plating. The electroforming plating causes the shape of the surface of the master to be transferred to the surface of the electroformed mold. Examples of the methods for forming the surface of the master include electron beam processing, laser processing, ion beam processing, photolithography, cutting, corroding, and engraving. To form the surface of the mold 21b, any one of these methods may be used to form the surface of the mold 21b on a member that is used to form the mold 21b. Alternatively, the mold 21b with a desired surface may be manufactured by manufacturing the surface of the original plate using any one of these methods and then transferring the surface of the original plate to a member that is used to form the mold 21b. As another option, the mold 21b with a desired surface may be manufactured through electroforming using a master.

The plate cylinder 21 may include only a columnar member. In this case, the outer surface of the columnar member is the surface of the plate cylinder 21, and the surface of the plate cylinder 21 includes an uneven surface corresponding to the surface of the embossed layer of the display body 2.

### Arrangement of Geometric Optical Structure, Wave Optical Structure, and Third Structure

The display body 2 may include only one or more relief patterns with which the third structure region C is in contact, in addition to at least one of the wave optical structure region B and the geometric optical structure region A.

For example, as shown in Fig. 7A, the geometric optical structure region A may be in contact with the third structure region C, and the third structure region C may be in contact with the wave optical structure region B. In the example of Fig. 7A, in a plan view of the flat surface on which the display body 2 spreads, the third structure region C surrounds the entire geometric optical structure region A and the wave optical structure region B surrounds the entire third structure region C. In this case, the light entering the wave optical structure region B and the light entering the geometric optical structure region A are divided from each other by the third structure region C. This prevents the occurrence of stray light between the regions. Thus, the visual effect provided by the display body 2 is expected to improve.

In more detail, in the example of Fig. 7A, the geometric optical structure region A has the shape of a five-pointed star in a plan view of the flat surface on which the display body 2 spreads. The third structure region C is shaped along the edge of the geometric optical structure region A and surrounds the entire geometric optical structure region A. That is, the third structure region C has the shape of a hollow five-pointed star. The edge of the wave optical structure region B is circular. The wave optical structure region B includes the geometric optical structure region A and the third structure region C in the circular region defined by the edge of the region B.

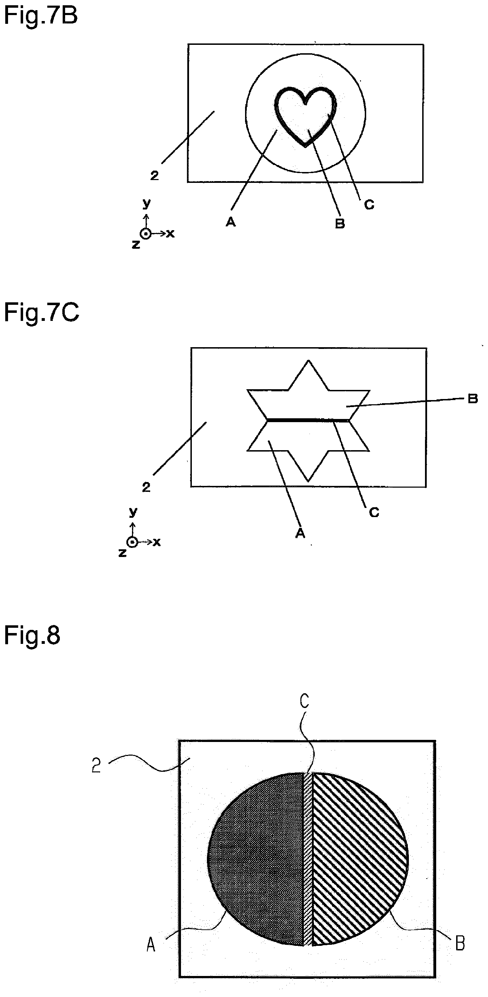

Alternatively, as shown in Fig. 7B, the wave optical structure region B may be in contact with the third structure region C, and the third structure region C may be in contact with the geometric optical structure region A. In the example of Fig. 7B, the third structure region C surrounds the entire wave optical structure region B, and the geometric optical structure region A surrounds the entire third structure region C. Thus, in the same manner as the example of Fig. 7A, the wave optical structure region B and the geometric optical structure region A are distanced from each other by the third structure region C. This prevents the occurrence of noise resulting from stray light that occurs between the regions. Accordingly, the visual effect of the display body 2 is expected to improve.

In more detail, in the example of Fig. 7B, the wave optical structure region B has the shape of a heart in a plan view of the flat surface on which the display body 2 spreads. The third structure region C is shaped along the edge of the wave optical structure region B and surrounds the entire wave optical structure region B. That is, the third structure region C has the shape of a hollow heart. The edge of the geometric optical structure region A is circular. The geometric optical structure region A includes the wave optical structure region B and the third structure region C in the circular region defined by the edge of the region A.

As an alternative, as shown in Fig. 7C, the geometric optical structure region A may be in contact with the third structure region C, and the third structure region C may be in contact with the wave optical structure region B. The geometric optical structure region A and the wave optical structure region B do not need to have a relationship in which one of the regions is surrounded by the other region. Even in this case, the geometric optical structure region A and the wave optical structure region B are distanced from each other by the third structure region C. Even in this case, the visual effect of the display body 2 is expected to improve at the portion where the geometric optical structure region A is in contact with the third structure region C and at the portion where the wave optical structure region B is in contact with the third structure region C in the display body 2.

In more detail, in the example of Fig. 7C, the third structure region C is located between the geometric optical structure region A and the wave optical structure region B in a plan view of the flat surface on which the display body 2 spreads. The geometric optical structure region A and the wave optical structure region B face each other with the third structure region C located in between in a plan view of the flat surface on which the display body 2 spreads. The geometric optical structure region A, the wave optical structure region B, and the third structure region C define a hexagram in a plan view of the flat surface on which the display body 2 spreads. The third structure region C is shaped to extend so as to divide the hexagram into two. The geometric optical structure region A is located in one of the regions divided by the third structure region C. The wave optical structure region B is located in the other one of the regions divided by the third structure region C.

The following structures may be employed as the structure in which the third structure region C is located between the geometric optical structure region A and the wave optical structure region B in a plan view of the flat surface on which the display body 2 spreads.

As shown in Fig. 8, the geometric optical structure region A, the wave optical structure region B, and the third structure region C may form the shape of one circle in a plan view of the flat surface on which the display body 2 spreads. The geometric optical structure region A and the wave optical structure region B are substantially semicircular. The third structure region C has the shape of a straight line extending in a direction that is orthogonal to the direction in which the geometric optical structure region A faces the wave optical structure region B. The geometric optical structure region A and the wave optical structure region B are symmetrical with respect to an axis of the third structure region C.

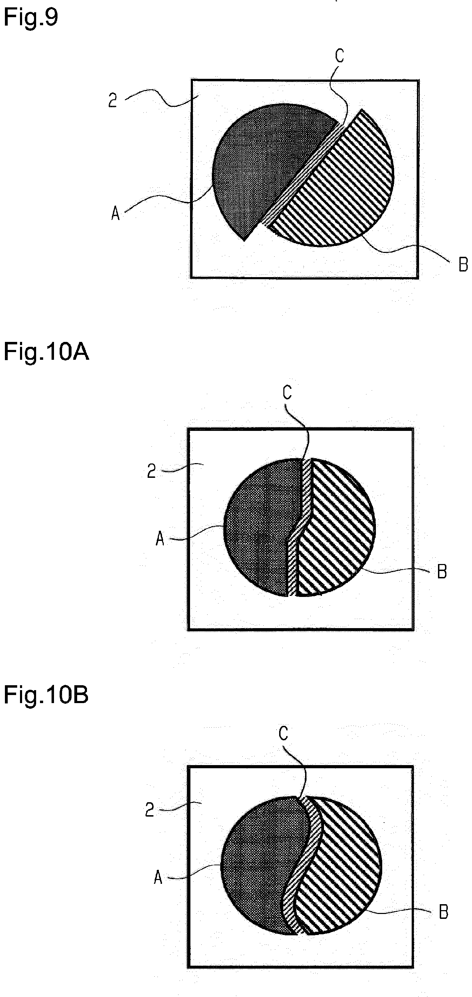

As shown in Fig. 9, the geometric optical structure region A and the wave optical structure region B are substantially semicircular in the same manner as the example of Fig. 8. In the example of Fig. 9, the display body 2 is rectangular. The third structure region C has the shape of a straight line extending in a direction that is inclined with respect to the sides of the display body 2. The geometric optical structure region A and the wave optical structure region B are in contact with the third structure region C and are inclined with respect to the sides of the display body 2 at the same angle as the third structure region C.

As shown in Fig. 10A, the geometric optical structure region A, the wave optical structure region B, and the third structure region C form the shape of one circle in the same manner as the example of Fig. 8. In the example of Fig. 10A, the third structure region C has the shape of a bent line in a plan view of the flat surface on which the display body 2 spreads. The portion of the geometric optical structure region A in contact with the third structure region C has the shape of a line bent along the third structure region C. The portion of the wave optical structure region B in contact with the third structure region C has the shape of a line bent along the third structure region C.

As shown in Fig. 10B, the geometric optical structure region A, the wave optical structure region B, and the third structure region C form the shape of one circle in the same manner as the example of Fig. 8. In the example of Fig. 10B, the third structure region C has a wavy shape in a plan view of the flat surface on which the display body 2 spreads. The portion of the geometric optical structure region A in contact with the third structure region C is wavy along the third structure region C. The portion of the wave optical structure region B in contact with the third structure region C is wavy along the third structure region C.

The mold 21b, which includes an uneven structure corresponding to the uneven structure of each region is used to transfer, to the surface of the embossed layer 4, the motif (illustration or pattern) formed by combining the above-described three regions. The uneven shape of the surface of the mold 21b is formed through electroforming using a matrix as described above. The matrix is formed by connecting individually-produced relief patterns with each other and imposing the matrix with the relief patterns.

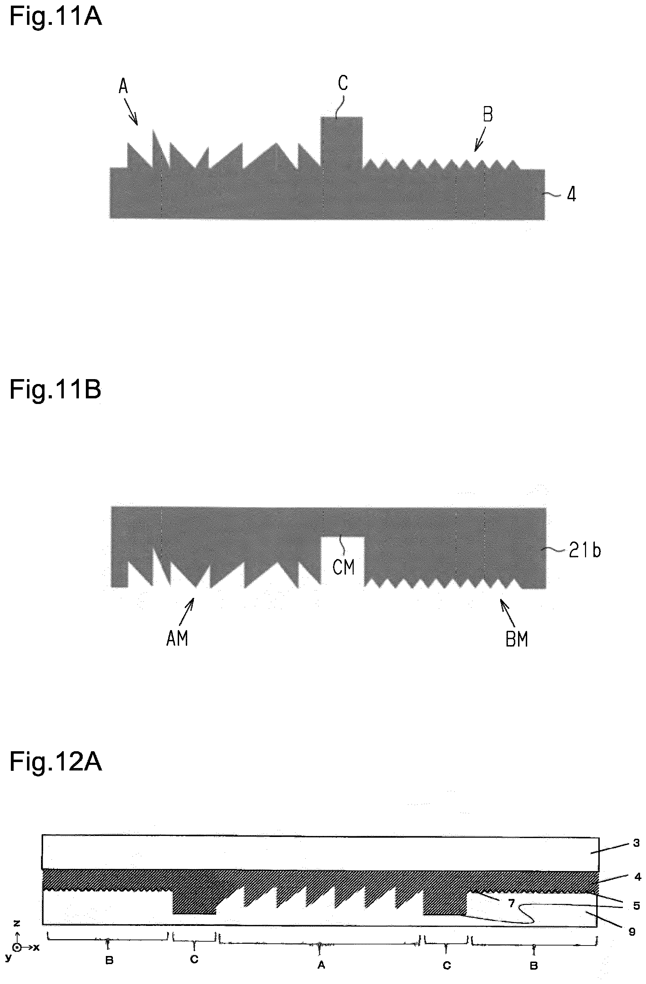

For example, when the cross-sectional structure shown in Fig. 11A is the cross-sectional structure of the manufactured display body 2, the mold 21b used to form the embossed layer 4 has the cross-sectional structure shown in Fig. 11B. That is, the cross-sectional structure of the mold 21b is obtained by reversing the cross-sectional structure of the display body 2. The mold 21b is formed through, for example, formation of multiple replicative molds based on the original plate, trimming of the replicative molds, imposition of the replicative molds, formation of plastic molds by replicating the replicative molds, and replication using plating of the plastic molds. In these processes, the mold having a shape of the reversed original plate and the mold having the same shape as the original plate are alternately repeated so that the mold 21b is finally obtained with a desired shape.

### Advantages of Layer Structure

The advantages obtained from the layer structure of the display body 2 will now be described. As described above, the display body 2 can include the carrier 3, the embossed layer 4, and the light reflection layer 5. In the display body 2, the layer structures of the above-described three regions are changed depending on the regions. This provides the display body 2 with a new visual effect.

For example, as shown in Fig. 12A, a part of the light reflection layer 5 does not have to be located in the geometric optical structure region A while a part of the light reflection layer 5 is located in the third structure region C and another part of the light reflection layer 5 is located in the wave optical structure region B. That is, the geometric optical structure region A includes only a part of the carrier 3 and a part of the embossed layer 4. In this case, in the wave optical structure region B, the reflection achieved by the refraction, absorption, interference, and diffraction of the light by the wave optical structure 7 is obtained as the visual effect of the wave optical structure region B. Further, in the third structure region C, the reflection by the third structure 8 is obtained as the visual effect of the third structure region C.

Since the light reflection layer 5 is not located in the geometric optical structure region A, the visual effect of the geometric optical structure region A is obtained when transmission in the geometric optical structure region A is observed. For example, in a case where the geometric optical structure 6 is the above-described microlens, a dynamic visual effect is achieved during the observation of transmission in the geometric optical structure region A by overlapping the geometric optical structure region A with a printed layer 9 of the microprint and focusing the microlens on the microprint. The printed layer 9 of the microprint may include, for example, a character and an illustration. The printed layer 9 may be closer to the embossed layer 4 or the light reflection layer 5 on the carrier 3. As described above, the display body 2 is gained with a visual effect that differs in the observation of reflection and the observation of transmission.

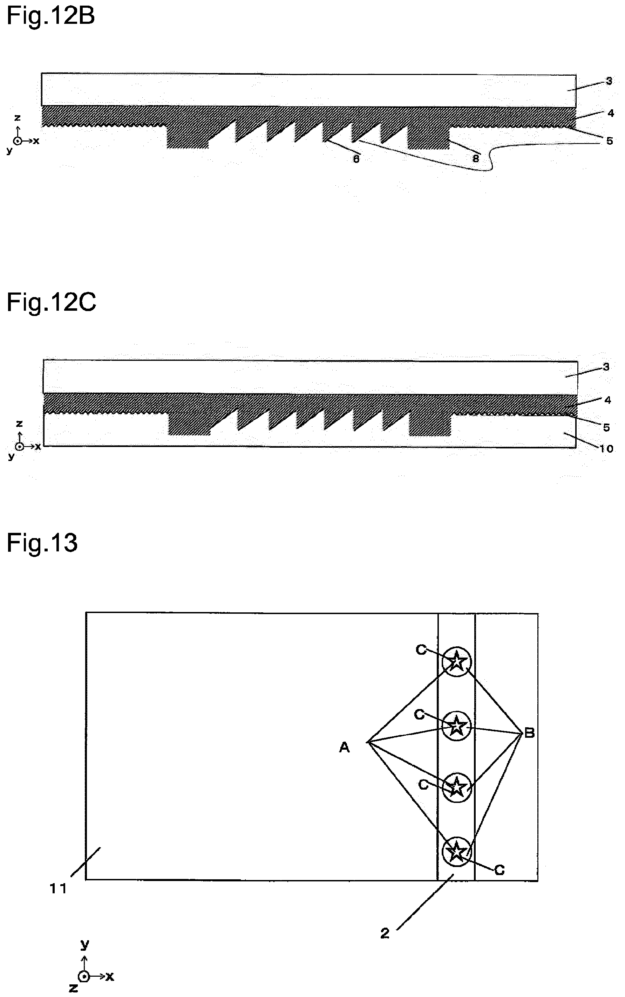

For example, as shown in Fig. 12B, a part of the light reflection layer 5 does not have to be located in the third structure 8 while a part of the light reflection layer 5 is located in the geometric optical structure region A and another part of the light reflection layer 5 is located in the wave optical structure region B. That is, the third structure region C includes only a part of the carrier 3 and a part of the embossed layer 4. In this case, when the transmission in the display body 2 is observed, light is transmitted only from the third structure region C functioning as a slit so that the light allows for observation of the contour of an illustration formed by the geometric optical structure 6. In the same manner as the example of Fig. 12A, the printed layer 9 is observed during the observation of transmission in the third structure region C by overlapping the printed layer 9 with the third structure region C.

Accordingly, for example, by changing the color or shape of the printed layer 9, the contour of the geometric optical structure 6 can be surrounded with any color or shape so as to gain the display body 2 capable of providing a visual effect. The printed layer 9 may be an ink layer made of only ink.

### Method for Partially Forming Light Reflection Layer

The method for partially forming the light reflection layer (i.e., the method for forming the light reflection layer 5 only on a part of the embossed layer 4) will now be described.

For example, the following method may be used to form the light reflection layer 5 only on a part of the embossed layer 4. First, for the display body including the embossed layer 4, the light reflection layer 5 is formed on the entire surface of the embossed layer 4. Then, for example, the portion of the light reflection layer 5 that is to be eliminated from the embossed layer 4 is regioselectively irradiated with a high-intensity laser beam so that the portion of the light reflection layer 5 irradiated with the laser beam is selectively fractured. Another method is to, for example, form a mask through mask printing on the portion of the light reflection layer 5 that is to be left on the embossed layer 4 and then corrode, using a corrosive agent, the portion of the light reflection layer 5 on which the mask is not formed, thereby forming the light reflection layer 5 on a part of the light reflection layer 5. In an alternative method, before the light reflection layer 5 is formed on the entire surface of the embossed layer 4, a water-soluble ink is first printed on the portion of the embossed layer 4 from which the light reflection layer 5 is to be eliminated. Then, after light reflection layer 5 is formed on the entire surface of the embossed layer 4, the water-soluble ink is washed off with water so that a part of the light reflection layer 5 is eliminated.

The following method may also be employed. First, the light reflection layer 5 is formed on the entire embossed layer 4. In this step, vapor deposition or sputtering may be performed. Then, in the same manner as forming the light reflection layer 5, a mask layer is formed on the light reflection layer 5 through vapor deposition or sputtering. The mask layer may be made of, for example, magnesium fluoride or silica. The wave optical structure 7 has a larger surface area than the geometric optical structure 6, and the geometric optical structure 6 has a larger surface area than the third structure 8. Thus, in the light reflection layer 5, the portion on the wave optical structure 7 is thinner than the portion on the geometric optical structure 6, and the portion on the geometric optical structure 6 is thinner than the portion on the third structure 8. Subsequently, wet-etching is performed for the display body 2 so as to selectively eliminate the thin portions of the light reflection layer 5 (i.e., the portion on the wave optical structure 7 and the portion on the geometric optical structure 6). If the light reflection layer 5 is made of aluminum, the etchant may be, for example, alkaline NaOH. The light reflection layer 5 is formed only on a part of the embossed layer 4 by performing wet-etching of the light reflection layer 5.

The display body 2 functions as a label when provided with an adhesive layer. The label including the display body 2 is attachable to a printed matter or the card 1. That is, the label includes the display body 2 and the adhesive layer and is attached to various articles by the adhesive layer. The article to which the label is attached is a labelled article.

For example, referring to Fig. 12C, in the display body 2, PET may be used for the carrier 3 and an ultraviolet-cured polymer may be used for the embossed layer 4. Further, an aluminum layer may be formed on the embossed layer 4 as the light reflection layer 5, and an adhesive layer 10 may be formed on the surface of the embossed layer 4 opposite to the surface that is in contact with the carrier 3. The use of the adhesive layer allows the article to support the display body 2. The display body 2 is difficult to counterfeit or imitate. Thus, when the label including the display body 2 is supported by the article, the labelled article, which is genuine, is difficult to counterfeit or imitate.

As another option, as shown in Fig. 13, the display body 2 may have a stripe shape. For example, in any one of the display bodies 2 of Figs. 12A to 12C, a peel layer is formed between the carrier 3 and the embossed layer 4. This provides a transfer foil including the display body 2. Then, the display body 2 included in the transfer foil is transferred to a security 11 so as to obtain the security 11 with a label, which is an example of the labelled printed matter. The labelled printed matter has an excellent aesthetic appeal. The label of the labelled printed matter allows for verification of whether the printed matter is genuine. The display body 2 may have the shape of a stripe or a patch. A print may be formed on the lower surface and the upper surface of the display body 2.

The thickness of the printed matter simply needs to be in a range of greater than or equal to 0.05 mm and less than or equal to 4 mm. The printed matter is a polymer film printed on the entire surface or a part of the surface of the printed matter, a piece of paper printed on the entire surface or a part of the surface of the printed matter, a printable polymer film, or a printable paper. The printed polymer film includes a base film and an anchor layer coated on the entire surface or a part of the surface of the base film, and is printed on the coated anchor layer. The printable polymer film includes a base film and an anchor layer that is coated such that the base film receives the print.

The base films of the printed polymer film and the printable polymer film may be polymer films. The printable paper is obtained by laminating a wood-free paper, a mechanical paper, a coated paper, an uncoated paper, or a film. The coated paper includes a piece of paper and an anchor layer coated by the entire or a part of the surface of the paper.

The above-described polymer film may be an extended polymer film or a non-extended polymer film. The extended polymer film or the non-extended polymer film may be a polyester film, a polycarbonate film, a polyethylene film, or a polypropylene film. The polyester film may be a polyethylene terephthalate film or a polyethylene naphthalate film. The polymer film may have a single-layer structure or a multi-layer structure. The multi-layer structure may include laminated layers made of the same material or may include alternately-laminated layers made of different materials.

The print may be a gravure print, an offset print, or a screen print. The print can be formed by printing ink. The ink may be a visible ink or an invisible ink. The ink may be a pigment ink or a dyestuff ink. The pigment ink may be a pearl ink or a magnetic ink. The non-visible ink may be a fluorescent ink or an infrared absorption ink. The illustration of the print may be a graphic, a picture, a portrait, a landmark, a mark, a logo, or a symbol.

The anchor layer used for the printable polymer film or the printed polymer film may be a thermoplastic resin, a thermosetting resin, or a thermoplastic/thermosetting resin. The plastic of which the anchor layer is made may be a polymer or a copolymer. The polymer or copolymer of which the anchor layer is made may be polyethylene, ethylene-methacrylic acid copolymer, polyethylenimine, or polyurethane. The positive polar group and the negative polar group of polyethylenimine provides a high adhesiveness with the printed matter by combining with the positive polar group and the negative polar group of ethylene-methacrylic acid copolymer.

The surface of the printed matter may be modified using a known surface modification treatment. The surface modification treatment provides a high adhesiveness between the printed matter and the display body 2. The surface modification treatment may include a corona discharging treatment, an ozone treatment, an ultraviolet light treatment, a radiation treatment, a roughening treatment, a chemical agent treatment, a plasma treatment, a low-temperature plasma treatment, and a grafting treatment. By attaching a label to a trademarked product or its package, the product or package gains an excellent aesthetic appeal. Further, the label allows for verification of whether the product is genuine.

The best mode for carrying out the present invention has been described with reference to the accompanying drawings. The scope of the present disclosure is not limited to the illustrated and described embodiments, but only by the scope of the claims.

The terms "part," "element," "pixel," "cell," "segment," "unit," "display body," and "article" used in the present disclosure are physical entities. Physical existence can refer to a physical form or a spatial form surrounded by matter. The physical entity may be a structure. The structure may have a specific function. The combination of structures having a specific function can provide a synergistic effect because of the combination of each function of each structure.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.).

To construe terms, configurations, features, aspects, and embodiments, the drawings should be referred to as necessary. Matters that can be directly and uniquely derived from the drawings should be the basis for amendment, in the same manner as the text.

It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite article "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"). The same holds true for the use of definite articles used to introduce claim recitations.

### DESCRIPTION OF THE REFERENCE NUMERALS

1...Card
2...Display Body
3...Carrier
4...Embossed Layer
5...Light Reflection Layer
6...Geometric Optical Structure
7...Wave Optical Structure
8...Third Structure
9...Printed Layer
10...Adhesive Layer
11...Security
A, AM...Geometric Optical Structure Region
B, BM...Wave Optical Structure Region
C, CM...Third Structure Region
20...Roll-to-Roll Apparatus
21...Plate Cylinder
22...Pressing Roll
23...Conveying Roll
24...Supplier
25...Heater
26...Irradiator
21a...Body
21b...Mold

## Claims

1. A display body (2), comprising an embossed layer (4), wherein
the embossed layer (4) includes a geometric optical structure region (A), and a wave optical structure region (B),
the embossed layer (4) includes a first uneven structure (6) in the geometric optical structure region (A), the first uneven structure (6) having a height (AH) of greater than or equal to 0.5 µm and less than 30 µm, and
the embossed layer (4) includes a second uneven structure (7) in the wave optical structure region (B), the display body being **characterised in that**
the second uneven structure (7) has a height (BH) of greater than or equal to 100 nm and less than 500 nm, **in that**
the embossed layer (4) includes a third structure region (C), the third structure region (C) being located between the geometric optical structure region (A) and the wave optical structure region (B), **in that**
the embossed layer (4) includes a third uneven structure (8) in the third structure region (C), the third uneven structure (8) having a height (CH) of greater than or equal to half a thickness of the embossed layer (4) and less than or equal to twice the height (AH) of the first uneven structure, the height (CH) of the third uneven structure (8) being greater than the height (AH) of the first uneven structure (6), and **in that**
the embossed layer (4) is fluorescent.

2. The display body (2) according to claim 1, wherein the third structure region (C) is in contact with the geometric optical structure region (A) and the wave optical structure region (B).

3. The display body (2) according to claim 1, wherein the third structure region (C) is in contact with one of the geometric optical structure region (A) and the wave optical structure region (B).

4. The display body (2) according to any one of claims 1 to 3, wherein
the third structure region (C) has a width of greater than or equal to the height (CH) of the third uneven structure (8) and less than or equal to 500 µm, and
the width of the third structure region (C) is a distance between edges of the third structure region (C) in a direction in which the geometric optical structure region (A) faces the wave optical structure region (B).

5. The display body (2) according to any one of claims 1 to 4, wherein
a portion where a top surface and a side surface that define an outer shape of the third uneven structure (8) intersect each other in a cross-section that is orthogonal to a flat surface on which the embossed layer (4) spreads is a corner of the third structure (8), and
the corner of the third uneven structure (8) is rounded.

6. The display body (2) according to claim 5, further comprising a carrier (3) that supports the embossed layer (4), wherein
the side surface of the third uneven structure (8) is inclined with respect to the carrier (3).

7. The display body (2) according to any one of claims 1 to 6, further comprising a light reflection layer (5), wherein
the light reflection layer (5) covers the geometric optical structure region (A), the wave optical structure region (B), and the third structure region (C).

8. The display body (2) according to any one of claims 1 to 6, further comprising a light reflection layer (5), wherein
the light reflection layer (5) covers one of the geometric optical structure region (A) and the wave optical structure region (B) and covers the third structure region (C).

9. The display body(2) according to any one of claims 1 to 6, further comprising a light reflection layer (5), wherein
the light reflection layer (5) covers the geometric optical structure region (A) and the wave optical structure region (B) and does not cover the third structure region (C).

10. A labelled printed matter, comprising:
a label including
the display body (2) according to any one of claims 1 to 9, and
an adhesive layer (10); and
a printed matter (11),
wherein the label is attached to the printed matter (11) by the adhesive layer (10).

## Patentansprüche

1. Anzeigekörper (2), der eine geprägte Schicht (4) aufweist, wobei
die geprägte Schicht (4) ein geometrisch-optisches Strukturgebiet (A) und ein wellenoptisches Strukturgebiet (B) enthält,
die geprägte Schicht (4) eine erste unebene Struktur (6) in dem geometrisch-optischen Strukturgebiet (A) enthält, wobei die erste unebene Struktur (6) eine Höhe (AH), die größer oder gleich 0,5 µm und kleiner als 30 µm ist, aufweist, und
die geprägte Schicht (4) eine zweite unebene Struktur (7) in dem wellenoptischen Strukturgebiet (B) enthält, wobei der Anzeigekörper **gekennzeichnet ist, dadurch** dass
die zweite unebene Struktur (7) eine Höhe (BH), die größer oder gleich 100 nm und kleiner als 500 nm ist, aufweist, **dadurch**, dass
die geprägte Schicht (4) ein drittes Strukturgebiet (C) enthält, wobei das dritte Strukturgebiet (C) zwischen dem geometrisch-optischen Strukturgebiet (A) und dem wellenoptischen Strukturgebiet (B) lokalisiert ist, **dadurch**, dass
die geprägte Schicht (4) in dem dritten Strukturgebiet (C) eine dritte unebene Struktur (8) enthält, wobei die dritte unebene Struktur (8) eine Höhe (CH), die größer als oder gleich einer Hälfte einer Dicke der geprägten Schicht (4) und weniger oder gleich dem doppelten der Höhe (AH) der ersten unebenen Struktur ist, aufweist, wobei die Höhe (CH) der dritten unebenen Struktur (8) größer als die Höhe (AH) der ersten unebenen Struktur (6) ist, und **dadurch**, dass
die geprägte Schicht (4) fluoreszierend ist.

2. Anzeigekörper (2) nach Anspruch 1, wobei das dritte Strukturgebiet (C) in Kontakt mit dem geometrisch-optischen Strukturgebiet und dem wellenoptischen Strukturgebiet (B) ist.

3. Anzeigekörper (2) nach Anspruch 1, wobei das dritte Strukturgebiet (C) in Kontakt mit einem aus dem geometrisch-optischen Strukturgebiet (A) und dem wellenoptischen Strukturgebiet (B) ist.

4. Anzeigekörper (2) nach einem der Ansprüche 1 bis 3, wobei
das dritte Strukturgebiet (C) eine Breite, die größer oder gleich der Höhe (CH) der dritten unebenen Struktur (8) und kleiner oder gleich 500 µm ist, hat, und
die Breite des dritten Strukturgebiets (C) ein Abstand zwischen Kanten des dritten Strukturgebiets (C) in einer Richtung, in der das geometrisch-optische Strukturgebiet (A) dem wellenoptischen Strukturgebiet (B) zugewandt ist, ist.

5. Anzeigekörper (2) nach einem der Ansprüche 1 bis 4, wobei
ein Anteil, an dem eine obere Oberfläche und eine Seitenoberfläche, die eine äußere Form der dritten unebenen Struktur (8) definieren, einander in einem Querschnitt, der senkrecht zu einer flachen Oberfläche, auf der sich die geprägte Schicht (4) ausbreitet, ist, schneiden, eine Ecke der dritten Struktur (8) ist, und
die Ecke der dritten unebenen Struktur (8) abgerundet ist.

6. Anzeigekörper (2) nach Anspruch 5, der ferner einen Träger (3) aufweist, der die geprägte Schicht (4) stützt, wobei
die Seitenoberfläche der dritten unebenen Struktur (8) mit Bezug auf den Träger (3) geneigt ist.

7. Anzeigekörper (2) nach einem der Ansprüche 1 bis 6, der ferner eine Lichtreflexionsschicht (5) aufweist, wobei
die Lichtreflexionsschicht (5), das geometrisch-optische Strukturgebiet (A) das wellenoptischen Strukturgebiet (B) und das dritte Strukturgebiet (C) bedeckt.

8. Anzeigekörper (2) nach einem der Ansprüche 1 bis 6, der ferner eine Lichtreflexionsschicht (5) aufweist, wobei
die Lichtreflexionsschicht (5) eines aus dem geometrisch-optischen Strukturgebiet (A) und dem wellenoptischen Strukturgebiet (B) bedeckt und das dritte Strukturgebiet (C) bedeckt.

9. Anzeigekörper (2) nach einem der Ansprüche 1 bis 6, der ferner eine Lichtreflexionsschicht (5) aufweist, wobei
die Lichtreflexionsschicht (5) das geometrisch-optische Strukturgebiet (A) und das wellenoptische Strukturgebiet (B) bedeckt und das dritte Strukturgebiet (C) nicht bedeckt.

10. Gekennzeichnetes Druckmaterial, das aufweist:
eine Kennzeichnung, die den Anzeigekörper (2) nach einem der Ansprüche 1 bis 9 und eine Haftschicht (10) enthält; und
ein Druckmaterial (11), wobei
die Kennzeichnung an dem Druckmaterial (11) durch die Haftschicht (10) angebracht ist.

## Revendications

1. Corps d'affichage (2), comprenant une couche gaufrée (4), dans lequel
la couche gaufrée (4) comporte une région de structure optique géométrique (A), et une région de structure optique ondulée (B),
la couche gaufrée (4) comporte une première structure irrégulière (6) dans la région de structure optique géométrique (A), la première structure irrégulière (6) ayant une hauteur (AH) supérieure ou égale à 0,5 µm et inférieure à 30 µm, et
la couche gaufrée (4) comporte une deuxième structure irrégulière (7) dans la région de structure optique ondulée (B), le corps d'affichage étant **caractérisé en ce que**
la deuxième structure irrégulière (7) a une hauteur (BH) supérieure ou égale à 100 nm et inférieure à 500 nm, **en ce que**
la couche gaufrée (4) comporte une troisième région de structure (C), la troisième région de structure (C) étant située entre la région de structure optique géométrique (A) et la région de structure optique ondulée (B), **en ce que**
la couche gaufrée (4) comporte une troisième structure irrégulière (8) dans la troisième région de structure (C), la troisième structure irrégulière (8) ayant une hauteur (CH) supérieure ou égale à la moitié de l'épaisseur de la couche gaufrée (4) et inférieure ou égale à deux fois la hauteur (AH) de la première structure irrégulière, la hauteur (CH) de la troisième structure irrégulière (8) étant supérieure à la hauteur (AH) de la première structure irrégulière (6), et **en ce que**
la couche gaufrée (4) est fluorescente.

2. Corps d'affichage (2) selon la revendication 1, dans lequel la troisième région de structure (C) est en contact avec la région de structure optique géométrique (A) et la région de structure optique ondulée (B).

3. Corps d'affichage (2) selon la revendication 1, dans lequel la troisième région de structure (C) est en contact avec l'une des régions de structure optique géométrique (A) et de structure optique ondulée (B).

4. Corps d'affichage (2) selon l'une quelconque des revendications 1 à 3, dans lequel
la troisième région de structure (C) a une largeur supérieure ou égale à la hauteur (CH) de la troisième structure irrégulière (8) et inférieure ou égale à 500 µm, et
la largeur de la troisième région de structure (C) est une distance entre des bords de la troisième région de structure (C) dans une direction dans laquelle la région de structure optique géométrique (A) fait face à la région de structure optique ondulée (B).

5. Corps d'affichage (2) selon l'une quelconque des revendications 1 à 4, dans lequel
une partie où une surface supérieure et une surface latérale qui définissent une forme extérieure de la troisième structure irrégulière (8) se croisent dans une section transversale qui est orthogonale à une surface plane sur laquelle la couche gaufrée (4) s'étend est un coin de la troisième structure (8), et
le coin de la troisième structure irrégulière (8) est arrondi.

6. Corps d'affichage (2) selon la revendication 5, comprenant en outre un support (3) qui soutient la couche gaufrée (4), dans lequel
la surface latérale de la troisième structure irrégulière (8) est inclinée par rapport au support (3).

7. Corps d'affichage (2) selon l'une quelconque des revendications 1 à 6, comprenant en outre une couche réfléchissant la lumière (5), dans lequel
la couche réfléchissant la lumière (5) recouvre la région de structure optique géométrique (A), la région de structure optique ondulée (B) et la troisième région de structure (C).

8. Corps d'affichage (2) selon l'une quelconque des revendications 1 à 6, comprenant en outre une couche réfléchissant la lumière (5), dans lequel
la couche réfléchissant la lumière (5) recouvre l'une des régions de structure optique géométrique (A) et de structure optique ondulée (B) et recouvre la troisième région de structure (C).

9. Corps d'affichage (2) selon l'une quelconque des revendications 1 à 6, comprenant en outre une couche réfléchissant la lumière (5), dans lequel
la couche réfléchissant la lumière (5) recouvre la région de structure optique géométrique (A) et la région de structure optique ondulée (B) et ne recouvre pas la troisième région de structure (C).

10. Imprimé étiqueté, comprenant :
une étiquette comportant
le corps d'affichage (2) selon l'une quelconque des revendications 1 à 9, et
une couche adhésive (10) ; et
un imprimé (11),
dans lequel l'étiquette est fixée à l'imprimé (11) par la couche adhésive (10).
